# EUROPÄISCHE PATENTSCHRIFT

(11) **EP 0 951 830 B1**
(45) Veröffentlichungstag und Bekanntmachung des Hinweises auf die Patenterteilung: **14.08.2002**
(21) Anmeldenummer: 99107230.7
(22) Anmeldetag: 14.04.1999
(51) Int. Cl.: A01M 31/00, G08B 13/19

(54) **Einrichtung zur Signalisierung von Bewegungen, insbesondere von Bewegungen von Tieren, im Überwachungsbereich wenigstens eines Bewegungsmelders**
Device for signaling motions, particularly motions of animals, in the surveillance area of at least one motion detector
Dispositif pour signaler des mouvements, en particulier les mouvements d'animaux, dans le domaine de surveillance d'au moins un détecteur de mouvement

(30) Priorität: 22.04.1998 DE 29807252 U
(43) Veröffentlichungstag der Anmeldung: 27.10.1999
(73) Patentinhaber: Ronski, Harald, 29348 Eschede (DE)
(72) Erfinder: Ronski, Harald, 29348 Eschede (DE)
(74) Vertreter: Leine, Sigurd, Dipl.-Ing.

(56) Entgegenhaltungen:
- DE-A- 3 531 392
- DE-A- 19 539 863
- DE-C- 4 140 662
- US-A- 5 517 201

## Beschreibung

Die Erfindung betrifft eine Einrichtung zur Signalisierung von Bewegungen, insbesondere von Bewegungen von Tieren, im Überwachungsbereich wenigstens eines Bewegungsmelders.

Bei der Beobachtung von Tieren in freier Natur, beispielsweise in der Tierfotografie oder auf der Jagd, muß ein Beobachter häufig lange warten, bis die Tiere in seinem Beobachtungsbereich erscheinen. Insbesondere bei Nacht besteht die Gefahr, daß der Beobachter während des Wartens einschläft und so den Moment, in dem die Tiere in seinem Beobachtungsbereich erscheinen, verpaßt.

Aus US 5,517,201 ist es bekannt, im Überwachungsbereich Infrarotsensoren zu installieren, die in den Überwachungsbereich eindringende Tiere detektieren und über einen mit ihnen verbundenen RF-Sender ein Detektionssignal an einen RF-Empfänger senden, der mit einer Meldevorrichtung verbunden ist, die ein optisches oder akustisches Signal aussendet um dem Beobachter das Eindringen des Tieres in den Überwachungsbereich zu melden. Nachteilig dabei ist, daß ein optisches Signal keine Abhilfe für das oben geschilderte Problem schafft, da es nur von einem wachen Beobachter wahrgenommen werden kann. Mit einem akustischen Signal kann zwar der schlafende Beobachter geweckt werden. Allerdings wir das Geräusch in der Regel auch von dem in den Überwachungsbereich eingedrungenen Tier wahrgenommen, das hierdurch zur Flucht animiert werden könnte, was es bei der Tierfotografie oder Jagd gerade zu vermeiden gilt.

Diesen Abschreckungseffekt macht sich der Gegenstand von DE 195 39 863 A1 bewußt zunutze. Hier wird eine Vorrichtung zum Vertreiben von Tieren durch akustische und ggf. zusätzliche optische Signale offenbart, die das Eindringen der Tiere in den Überwachungsbereich ebenfalls durch Detektion ihrer Bewegung erkennt.

DE 41 40 662 C1 hingegen offenbart eine Warnvorrichtung, die durch Blinklichter Autofahrer vor Wild warnt, das sich der Fahrbahn nähert und ebenfalls über Bewegungssensoren detektiert wird. Auch diese Vorrichtung setzt einen wachen Beobachter voraus und ist daher zur Lösung des oben beschriebenen Problems nicht anwendbar.

Der Erfindung liegt die Aufgabe zugrunde, eine gattungsgemäße Einrichtung derart weiterzubilden, daß einerseits das Wahrnehmen des Meldesignals nicht die dauernde Aufmerksamkeit des Beobachters erfordert, daß aber andererseits in den Überwachungsbereich eindringendes Wild nicht durch das Meldesignal verscheucht wird.

Diese Aufgabe wird durch die Lehre gemäß Anspruch 1 gelöst. Den Merkmalen in dessen kennzeichnendem Teil kommt folgende Bedeutung zu. Die Signalerzeugungsmittel umfassen wenigstens einen Vibrationssignalgeber, der als Meldsignal ein taktil wahrnehmbares Vibrationssignal ausgibt. Dieses signalisiert dem Beobachter schnell und zuverlässig, daß im Überwachungsbereich eine Bewegung aufgetreten ist. Die erfindungsgemäße Wahl der Signalerzeugungsmittel als Vibrationssignalgeber gestatten es dem Beobachter, von einer ständigen Überwachung der Signalerzeugungsmittel absehen zu können, die im Fall eines optischen Meldesignals erforderlich wäre. Durch die erfindungsgemäße Vorrichtung wird der Benutzer auch dann auf ein Ansprechen des Bewegungsmelders aufmerksam gemacht, wenn er abgelenkt oder sogar eingeschlafen ist. Gleichzeitig ist aber auch gewährleistet, daß das beobachtete Wild das Meldesignal nicht wahrnimmt und dadurch verschreckt wird, wie es bei einem akustischen Meldesignal der Fall sein könnte.

Wird die erfindungsgemäße Einrichtung beispielsweise in der Tierfotografie oder auf der Jagd verwendet, so wird der Bewegungsmelder so angebracht, daß sich die zu beobachtenden Tiere in den Überwachungsbereich bewegen, was dem Benutzer der Einrichtung durch das Meldesignal signalisiert und der Benutzer somit auf die Anwesenheit der Tiere aufmerksam gemacht wird.

Die erfindungsgemäße Einrichtung ist einfach und kostengünstig herstellbar. Sie ist in allen Bereichen anwendbar, wo einem Benutzer die Feststellung von Bewegungen durch einen Bewegungsmelder zu signalisieren ist.

Die Signalerzeugungsmittel können in vielfältiger Weise weitergebildet sein. Eine Ausführungsform sieht vor, daß die Signalerzeugungsmittel zusätzlich wenigstens einen optischen Signalgeber aufweisen, derart, daß das Meldesignal ein optisches Signal ist. Das optische Signal kann beispielsweise durch ein Blinksignal oder eine Anzeige auf einem Display gebildet sein.

Eine besonders vorteilhafte Ausführungsform sieht vor, daß die Signalerzeugungsmittel zusätzlich wenigstens einen akustischen Signalgeber aufweisen, derart, daß das Meldesignal ein akustisches Signal ist.

Eine Weiterbildung der vorgenannten Ausführungsform sieht vor, daß der akustische Signalgeber durch wenigstens einen Lautsprecher eines Kopfhörers oder eines Ohrhörers gebildet ist. Bei dieser Ausführungsform wird dem Benutzer das Ansprechen des Bewegungsmelders zwar auf akustische Weise zuverlässig signalisiert, die Umgebung wird jedoch durch akustische Signale nicht gestört.

Der oder jeder Bewegungsmelder kann in vielfältiger Weise ausgebildet sein, beispielsweise kann der Bewegungsmelder optische oder mechanische Sensoren aufweisen, die Bewegungen erfassen. Eine besonders zweckmäßige Ausführungsform sieht jedoch vor, daß der oder jeder Bewegungsmelder ein Infrarot-Bewegungsmelder ist. Infrarot-Bewegungsmelder stehen als einfache und kostengünstige Standardbauteile zu Verfügung, so daß die erfindungsgemäße Einrichtung einfach und kostengünstig herstellbar ist. Darüber hinaus weisen Infrarot-Bewegungsmelder eine hohe Empfindlichkeit auf, so daß die erfindungsgemäße Einrichtung mit entsprechend hoher Empfindlichkeit auf Bewegungen anspricht. Durch entsprechende Wahl eines Bewegungsmelders ist der Überwachungsbereich der erfindungsgemäßen Einrichtung in weiten Grenzen wählbar.

Grundsätzlich können die Übertragungsmittel das Steuersignal leitungsgebunden zu den entfernt von dem Bewegungsmelder angeordneten Signalerzeugungsmitteln übertragen. Eine besonders vorteilhafte Ausführungsform sieht jedoch vor, daß die Übertragungsmittel das Steuersignal drahtlos zu den Signalerzeugungsmitteln übertragen. Bei dieser Ausführungsform sind die Signalerzeugungsmittel räumlich nicht an den Bewegungsmelder gebunden, so daß die erfindungsgemäße Einrichtung in räumlicher Hinsicht flexibel aufstellbar ist.

Eine besonders zweckmäßige Weiterbildung der vorgenannten Ausführungsform sieht vor, daß die Übertragungsmittel einen mit den Steuermitteln verbundenen Funksender zum Senden des Steuersignales und einen mit den Signalerzeugungsmitteln verbundenen Funkempfänger zum Empfangen des Steuersignales aufweisen. Bei dieser Ausführungsform erfolgt die Übertragung des Steuersignales per Funk, so daß die erfindungsgemäße Einrichtung erforderlichenfalls auch ohne Sichtkontakt zwischen dem Bewegungsmelder und den Signalerzeugungsmitteln betreibbar ist. Außerdem ist diese Ausführungsform zuverlässig und störsicher.

Eine andere Ausführungsform sieht vor, daß der oder jeder Bewegungsmelder ein Gehäuse aufweist, das gegen ein Eindringen von Feuchtigkeit abgedichtet ist. Auf diese Weise ist die erfindungsgemäße Einrichtung auch bei nassem oder regnerischem Wetter betreibbar, ohne daß die Gefahr besteht, daß der Bewegungsmelder durch eindringende Feuchtigkeit in seiner Funktion beeinträchtigt wird.

Grundsätzlich kann der oder jeder Bewegungsmelder ortsfest installiert sein. Eine Weiterbildung sieht jedoch vor, daß der oder jeder Bewegungsmelder Befestigungsmittel zur Befestigung des Bewegungsmelders an einem Baum oder dergleichen aufweist. Bei dieser Ausführungsform ist der Bewegungsmelder in schneller und einfacher Weise an unterschiedlichen Stellen befestigbar.

Eine Weiterbildung der vorgenannten Ausführungsform sieht vor, daß die Befestigungsmittel durch einen Gurt oder dergleichen gebildet sind. Bei dieser Ausführungsform ist der Bewegungsmelder an einem Baum oder dergleichen festschnallbar.

Die Signalerzeugungsmittel können ortsfest angebracht sein, beispielsweise auf einem Hochstand eines Jägers. Gemäß einer besonders vorteilhaften Weiterbildung sind die Signalerzeugungsmittel jedoch in einem handgehaltenen oder am Körper tragbaren Gehäuse aufgenommen. Auf diese Weise kann der Benutzer die Signalerzeugungsmittel stets bei sich tragen, so daß ihm an seinem jeweiligen Standort stets ein Ansprechen des Bewegungsmelders signalisiert wird.

Gemäß einer Weiterbildung der vorgenannten Ausführungsform weist das Gehäuse Haltemittel zum Halten des Gehäuses an einem Kleidungsstück oder dergleichen eines Benutzers auf. Hierdurch ist die Gefahr verringert, daß der Benutzer das Gehäuse der Signalerzeugungsmittel verliert.

Zweckmäßigerweise weisen die Haltemittel einen Clip oder eine Klemme auf. Hierdurch ist das Gehäuse der Signalerzeugungsmittel an einem Kleidungsstück festklemmbar.

Eine andere Ausführungsform sieht vor, daß eine Spannungsversorgung des oder jedes Bewegungsmelders und/oder eine Spannungsversorgung der Signalerzeugungsmittel durch jeweils wenigstens eine Batterie oder jeweils wenigstens einen Akku gebildet ist. Auf diese Weise ist die erfindungsgemäße Einrichtung auch dort betreibbar, wo eine ortsfeste Spannungsversorgung nicht zur Verfügung steht, beispielsweise in der freien Natur.

Die Erfindung soll nachfolgend anhand der beigefügten Zeichnung näher erläutert werden, in der Ausführungsbeispiele der erfindungsgemäßen Einrichtung dargestellt sind.

Es zeigt
- Fig. 1: ein schematisches Blockschaltbild eines Ausführungsbeispieles der erfindungsgemäßen Einrichtung und
- Fig. 2: eine schematische Darstellung der Einrichtung gemäß Fig. 1 zur Verwendung bei der Jagd.

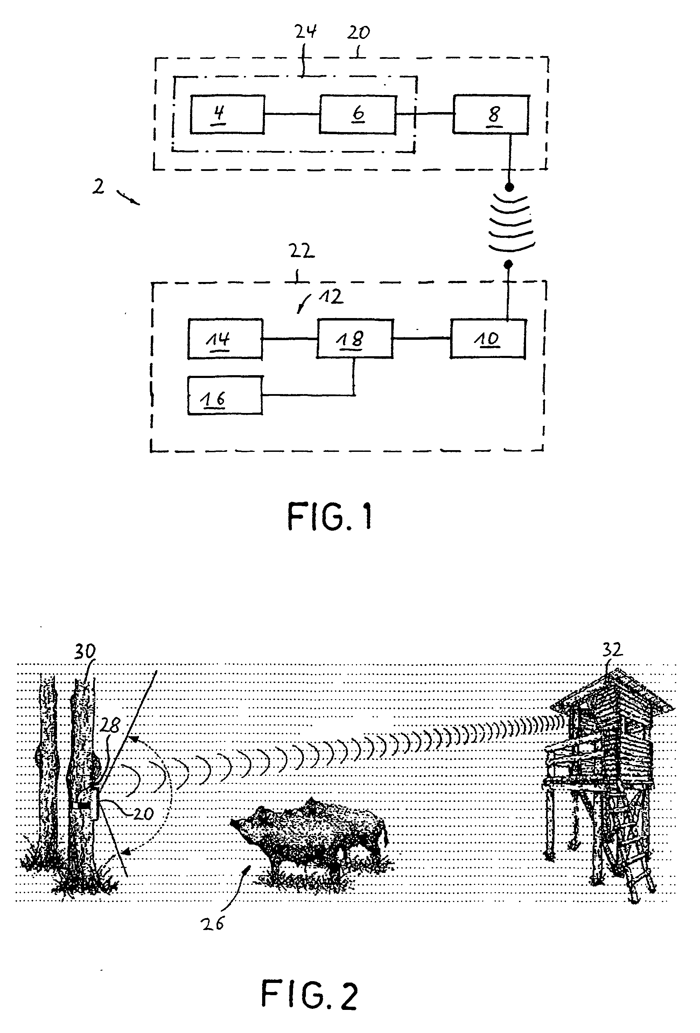

In Fig. 1 ist eine erfindungsgemäße Einrichtung 2 dargestellt, die einen Bewegungsmelder 4 aufweist, der mit Steuermitteln 6 verbunden ist, die bei Feststellung einer Bewegung im Überwachungsbereich des Bewegungsmelders 4 ein Steuersignal erzeugen. Anstelle eines einzigen Bewegungsmelders 4 können auch mehrere Bewegungsmelder vorgesehen sein.

Die Einrichtung 2 weist ferner Übertragungsmittel auf, die bei diesem Ausführungsbeispiel einen mit den Steuermitteln 6 verbundenen Funksender 8 zum Senden eines von den Steuermitteln 6 erzeugten Steuersignales und einen Funkempfänger 10 zum Empfangen des von den Steuermitteln 6 erzeugten und von dem Funkempfänger 8 gesendeten Steuersignales aufweisen. Der Funkempfänger 10 ist mit Signalerzeugungsmitteln 12 verbunden, die bei diesem Ausführungsbeispiel einen Vibrationssignalgeber 14 und einen akustischen Signalgeber 16 aufweisen. Der Vibrationssignalgeber 14 und der akustische Signalgeber 16 sind mit Steuermitteln 18, die mit dem Funkempfänger 10 verbunden sind, verbunden und durch die Steuermittel 18 ansteuerbar.

Die Komponenten des sendeseitigen Teiles der Einrichtung 2 können in einem gemeinsamen Gehäuse aufgenommen sein, wie dies in Fig. 1 durch eine gestrichelte Linie 20 angedeutet ist, und die Komponenten des empfangsseitigen Teiles der Einrichtung 2 können in einem weiteren Gehäuse aufgenommen sein, wie dies in Fig. 1 durch eine gestrichelte Linie 22 angedeutet ist. Die sendeseitigen Steuermittel 6 können durch eine separate Baugruppe gebildet sein; sie können jedoch auch als Teil des Bewegungsmelders 4 ausgebildet sein, wie dies in Fig. 1 durch eine strichpunktierte Linie 24 angedeutet ist.

In Fig. 2 ist die Einrichtung 2 in einer Anordnung dargestellt, in der sie zum Signalisieren von Bewegungen von Tieren 26 im Überwachungsbereich des Bewegungsmelders 4 verwendet wird. Hierzu ist das Gehäuse 20 des sendeseitigen Teiles der Einrichtung mittels Befestigungsmitteln, die bei diesem Ausführungsbeispiel durch einen Gurt 28 gebildet sind, an einem Baum 30 befestigt. Der empfangsseitige Teil der Einrichtung 2 ist entfernt von dem sendeseitigen Teil, jedoch innerhalb der Reichweite des Funksenders 8 angeordnet. Den emfangsseitigen Teil der Einrichtung 2 kann ein Benutzer bei sich tragen, beispielsweise mittels eines in der Zeichnung nicht dargestellten Clips oder einer Klammer an einem seiner Kleidungsstücke befestigt, oder der empfangsseitige Teil kann auch ortsfest installiert sein, beispielsweise an einem Hochstand 32, auf dem sich ein Benutzer der Einrichtung 2, beispielsweise ein Tierfotograf oder ein Jäger, befindet.

Bei Feststellung von Bewegungen im Überwachungsbereich des Bewegungsmelders 4, beispielsweise von Bewegungen der Tiere 26, spricht der Bewegungsmelder 4 an, so daß die Steuermittel 6 ein Steuersignal erzeugen, das der Sender 8 des sendeseitigen Teils der Einrichtung 2 per Funk zum empfangsseitigen Teil der Einrichtung 2 überträgt.

Am empfangsseitigen Teil der Einrichtung 2 empfängt der Empfänger 10 das von dem Sender 8 gesendete Steuersignal und veranlaßt die empfangsseitigen Steuermittel 18, den Vibrationssignalgeber 14 zur Erzeugung eines Vibrationssignales und den akustischen Signalgeber 16 zur Erzeugung eines akustisches Signales anzusteuern.

Durch das Vibrationssignal und das akustische Signal als Meldesignal wird dem Benutzer der Einrichtung 2 signalisiert, daß sich die Tiere 26 im Überwachungsbereich des Bewegungsmelders 4 befinden. Ist der Benutzer unaufmerksam geworden oder sogar eingeschlafen, so wird seine Aufmerksamkeit durch das Meldesignal wieder auf den Überwachungsbereich des Bewegungsmelders 4 gelenkt bzw. der Benutzer aufgeweckt.

## Patentansprüche

1. Einrichtung zur Signalisierung von Bewegungen, insbesondere von Bewegungen von Tieren, im Überwachungsbereich wenigstens eines Bewegungsmelders,
mit wenigstens einem Bewegungsmelder (4),
mit Steuermitteln (6), die bei Feststellung einer Bewegung im Überwachungsbereich des Bewegungsmelders (4) ein Steuersignal erzeugen und
mit Übertragungsmitteln zum Übertragen des Steuersignales zu entfernt von dem Bewegungsmelder (4) angeordneten Signalerzeugungsmitteln (12), die als Antwort auf ein Steuersignal ein Meldesignal erzeugen,
**dadurch gekennzeichnet,**
**daß** die Signalerzeugungsmittel (12) wenigstens einen Vibrationssignalgeber (14) aufweisen, derart, daß das Meldesignal ein Vibrationssignal ist.

2. Einrichtung nach Anspruch 1, **dadurch gekennzeichnet, daß** die Signalerzeugungsmittel (12) wenigstens einen optischen Signalgeber (16) aufweisen, derart, daß das Meldesignal ein optisches Signal ist.

3. Einrichtung nach Anspruch 1 oder 2, **dadurch gekennzeichnet, daß** die Signalerzeugungsmittel (12) wenigstens einen akustischen Signalgeber (16) aufweisen, derart, daß das Meldesignal ein akustisches Signal ist.

4. Einrichtung nach Anspruch 3, **dadurch gekennzeichnet, daß** der akustische Signalgeber (16) durch wenigstens einen Lautsprecher eines Kopfhörers oder eines Ohrhörers gebildet ist.

5. Einrichtung nach einem der vorhergehenden Ansprüche, **dadurch gekennzeichnet, daß** der oder jeder Bewegungsmelder (4) ein Infrarot-Bewegungsmelder ist.

6. Einrichtung nach einem der vorhergehenden Ansprüche, **dadurch gekennzeichnet, daß** die Übertragungsmittel das Steuersignal drahtlos zu den Signalerzeugungsmitteln (12) übertragen.

7. Einrichtung nach Anspruch 6, **dadurch gekennzeichnet, daß** die Übertragungsmittel einen mit den Steuermitteln (6) verbundenen Funksender (8) zum Senden des Steuersignales und einen mit den Signalerzeugungsmitteln (12) verbundenen Funkempfänger (10) zum Empfangen des Steuersignales aufweisen.

8. Einrichtung nach einem der vorhergehenden Ansprüche, **dadurch gekennzeichnet, daß** der oder jeder Bewegungsmelder (4) ein Gehäuse (20) aufweist, das gegen ein Eindringen von Feuchtigkeit abgedichtet ist.

9. Einrichtung nach einem der vorhergehenden Ansprüche, **dadurch gekennzeichnet, daß** der oder jeder Bewegungsmelder (4) Befestigungsmittel zur Befestigung des Bewegungsmelders (4) an einem Baum oder dergleichen aufweist.

10. Einrichtung nach Anspruch 11, **dadurch gekennzeichnet, daß** die Befestigungsmittel durch einen Gurt (28) oder dergleichen gebildet sind.

11. Einrichtung nach einem der vorhergehenden Ansprüche, **dadurch gekennzeichnet, daß** die Signalerzeugungsmittel (12) in einem handgehaltenen oder am Körper tragbaren Gehäuse (22) aufgenommen sind.

12. Einrichtung nach Anspruch 11, **dadurch gekennzeichnet, daß** das Gehäuse (22) Haltemittel zum Halten des Gehäuses (22) an einem Kleidungsstück oder dergleichen eines Benutzers aufweist.

13. Einrichtung nach Anspruch 12, **dadurch gekennzeichnet, daß** die Haltemittel wenigstens einen Clip oder wenigstens eine Klemme aufweisen.

14. Einrichtung nach einem der vorhergehenden Ansprüche, **dadurch gekennzeichnet, daß** eine Spannungsversorgung des oder jedes Bewegungsmelders (4) und/oder eine Spannungsversorgung der Signalerzeugungsmittel (12) durch jeweils wenigstens eine Batterie oder jeweils wenigstens einen Akku gebildet ist.

## Claims

1. A device for signalling motions, particularly motions of animals, in the surveillance area of at least one motion detector, with at least one motion detector having control means (6) which produce a control signal on establishing a motion in the surveillance area of the motion detector (4) and having transmitting means for transmitting control signals to signal producing means (12), arranged at a distance from motion detector (4), which produce a detector signal as an answer to a control signal,
**characterised in that** the signal producing means (12) have at least one vibration signal transmitter (14), such that the detector signal is a vibration signal.

2. A device according to claim 1, **characterised in that** the signal producing means (12) have at least one optical signal transmitter (16), such that the detector signal is an optical signal.

3. A device according to claims 1 or 2, **characterised in that** the signal producing means (12) have at least one acoustic signal transmitter (16), such that the detector signal is an acoustic signal..

4. A device according to claim 3, **characterised in that** the acoustic signal transmitter (16) is formed from at least a headphones or earphones loudspeaker.

5. A device according to any of the above claims, **characterised in that** the or each motion detector (4) is an infrared-motion detector.

6. A device according to any of the above claims, **characterised in that** the transmission means radio-transmits the control signal to the signal producing means (12).

7. A device according to claim 6, **characterised in that** the transmission means have a wireless transmitter (8) connected to control means (6) for transmitting the control signal and a wireless receiver (10) connected to the signal producing means (12) for receiving the control signal.

8. A device according to any of the above claims, **characterised in that** the or each motion detector (4) has a housing (20), which is sealed from moisture penetration.

9. A device according to any of the above claims, **characterised in that** the or each motion detector (4) has securing means for securing the motion detector (4) to a tree or the like.

10. A device according to claim 11, **characterised in that** the securing means are formed from a strap (28) or the like.

11. A device according to any of the above claims, **characterised in that** the signal producing means (12) are incorporated in a housing (22) which is hand-held or which can be worn or carried on the body.

12. A device according to claim 11, **characterised in that** housing (22) has holding means for holding housing (22) on an item of clothing or the like of the user.

13. A device according to claim 12, **characterised in that** the holding means have at least a clip or at least a clamp.

14. A device according to any of the above claims, **characterised in that** a voltage supply of the or each motion detector (4) and/or a voltage supply of the signal producing means (12) is formed in each case by at least a battery or at least an accumulator.

## Revendications

1. Dispositif pour signaler des mouvements, en particulier des mouvements d'animaux, dans la zone de surveillance d'au moins un détecteur de mouvement,
avec au moins un détecteur de mouvement (4),
avec des moyens de commande (6), qui produisent un signal de commande lors de la constatation d'un mouvement dans la zone de surveillance du détecteur de mouvement (4) et
avec des moyens de transmission pour la transmission du signal de commande à des moyens de génération de signal (12) disposés éloignés du détecteur de mouvement (4), qui produisent un signal d'avertissement en réponse au signal de commande,
**caractérisé en ce que**,
les moyens de génération de signal (12) présentent au moins un émetteur de signaux vibratoires (14) de telle sorte que le signal d'avertissement est un signal vibratoire.

2. Dispositif selon la revendication 1,
**caractérisé en ce que** les moyens de génération de signal (12) présentent au moins un émetteur de signaux optiques (16) de telle sorte que le signal d'avertissement est un signal optique.

3. Dispositif selon la revendication 1 ou 2,
**caractérisé en ce que** les moyens de génération de signal (12) présentent au moins un émetteur de signaux acoustiques (16) de telle sorte que le signal d'avertissement est un signal acoustique.

4. Dispositif selon la revendication 3,
**caractérisé en ce que** l'émetteur de signaux acoustiques (16) est constitué d'au moins un haut-parleur d'un écouteur de casque ou d'un écouteur d'oreille.

5. Dispositif selon l'une des revendications précédentes,
**caractérisé en ce que** le ou chaque détecteur de mouvement (4) est un détecteur de mouvement à infra rouges.

6. Dispositif selon l'une des revendications précédentes,
**caractérisé en ce que** les moyens de transmission transmettent sans fil le signal de commande aux moyens de génération de signal (12).

7. Dispositif selon la revendication 6,
**caractérisé en ce que** les moyens de transmission présentent un émetteur radio (8) relié aux moyens de commande (6) pour envoyer le signal de commande et un récepteur radio (10) relié aux moyens de génération de signal (12) pour recevoir le signal de commande.

8. Dispositif selon l'une des revendications précédentes,
**caractérisé en ce que** le ou chaque détecteur de mouvement (4) présente un carter (20) qui est rendu étanche contre la pénétration d'humidité.

9. Dispositif selon l'une des revendications précédentes,
**caractérisé en ce que** le ou chaque détecteur de mouvement (4) présente des moyens de fixation pour fixer le détecteur de mouvement (4) à un arbre ou similaire.

10. Dispositif selon la revendication 11,
**caractérisé en ce que** les moyens de fixation sont formés par une sangle (28) ou similaire.

11. Dispositif selon l'une des revendications précédentes,
**caractérisé en ce que** les moyens de génération de signal (12) sont logés dans un boîtier (22) portatif ou portable sur le corps.

12. Dispositif selon la revendication 11,
**caractérisé en ce que** le boîtier (22) présente des moyens de maintien pour maintenir le boîtier (22) sur une pièce d'habillement ou similaire d'un utilisateur.

13. Dispositif selon la revendication 12,
**caractérisé en ce que** les moyens de maintien présentent au moins un clip ou au moins une pince.

14. Dispositif selon l'une des revendications précédentes,
**caractérisé en ce qu'**une alimentation en tension du ou de chaque détecteur de mouvement (4) et/ou une alimentation en tension des moyens de génération de signal (12) est constituée par respectivement au moins une pile ou respectivement au moins un accumulateur.
